# EUROPÄISCHE PATENTSCHRIFT

(11) **EP 0 910 057 B1**
(45) Veröffentlichungstag und Bekanntmachung des Hinweises auf die Patenterteilung: **01.12.2004**
(21) Anmeldenummer: 98117580.5
(22) Anmeldetag: 16.09.1998
(51) Int. Cl.: G08G 1/16, B60T 7/12

(54) **Verfahren zur Sicherheitsüberwachung eines Kraftfahrzeuges**
Method to monitor the safety of a vehicle
Procédé de surveillance de la sécurité d'un véhicule

(30) Priorität: 13.10.1997 DE 19745166
(43) Veröffentlichungstag der Anmeldung: 21.04.1999
(73) Patentinhaber: Volkswagen Aktiengesellschaft, 38436 Wolfsburg (DE)
(72) Erfinder: Mai, Rudolf, 38442 Wolfsburg (DE); Bergholz, Ralf, Dr., 38108 Braunschweig (DE); Leemann, Christoph, 85051 Ingolstadt (DE); Schleuter, Willibert, Dr., 85049 Ingolstadt (DE)

(56) Entgegenhaltungen:
- EP-A- 0 347 242
- EP-A- 0 543 543
- EP-A- 0 770 979
- US-A- 5 315 295
- US-A- 5 612 883
- US-A- 5 661 650

## Beschreibung

Die Erfindung betrifft ein Verfahren zur Sicherheitsüberwachung eines Kraftfahrzeuges, gemäß dem Oberbegriff des Anspruchs 1.

Im Fahrbetrieb eines Kraftfahrzeuges kommt es häufig dadurch zu Unfällen, daß ein Fahrer eine vor ihm liegende Gefahrenstelle nicht oder zu spät erkennt oder falsch einschätzt, so daß eine der Gefahrenstelle nicht entsprechend angepaßte Geschwindigkeit zu einem Unfall führt.

Aus der DE 44 34 789 A1 ist ein GPS-gestütztes Sicherheitssystem für Verkehrswege bekannt, wobei jedes einen gemeinsamen Verkehrsweg benutzendes Fahrzeug die eigene Position an andere den gemeinsamen Verkehrsweg benutzende Fahrzeuge weiterleitet und Bordrechner in jedem Fahrzeug diese Daten auswerten und eventuelle Gefahrenzustände ermitteln. Dieses System ist sehr aufwendig, da neben einer Satelliten-Navigation in jedem Fahrzeug ein zusätzlicher Kommunikationsweg zwischen den Fahrzeugen des Verkehrsweges zur Verfügung gestellt werden muß. Ferner können fahrstreckenspezifische Gefahrenstellen von diesem System nicht berücksichtigt werden.

Aus der DE-OS 29 08 553 ist ein Verfahren und eine Anordnung zur Erhöhung der Verkehrssicherheit und zur Zielführung von Straßenfahrzeugen bekannt, wobei durch Signalaufnehmer und Signalgeber in einer Fahrbahndecke eine momentane Verkehrssituation erfaßt und Warnhinweise an diese Signalgeber passierende Fahrzeuge abgegeben werden, falls die Geschwindigkeit des passierenden Fahrzeugs der momentanen Verkehrssituation nicht angepaßt ist. Dieses System ist jedoch aufwendig und erfordert erfordert einen umfangreichen gerätebaulichen Aufwand an der Fahrstrecke und daran angepaßte Geräte in den Kraftfahrzeugen.

Aus der US 5,315,295 ist ein Geschwindigkeitssteuerungssystem bekannt, welches mittels eines Navigationssystems Information über auf der Fahrstrecke liegende Kurven bereitstellt. Das System kontrolliert dabei automatisch die Geschwindigkeit des Fahrzeugs, sobald dieses in die Kurve einfährt.

Die Aufgabe der vorliegenden Erfindung ist es, ein Verfahren zur Sicherheitsüberwachung eines Kraftfahrzeuges anzugeben, bei dem mittels digital gespeicherter Straßeninformation Fahrbahnneigungen und/oder Kreuzungen entlang einer Fahrstrecke lokalisiert werden und wobei mittels dieser und zusätzlicher fahrzeugeigener Information in den Fahrbetrieb eingegriffen werden kann.

Diese Aufgabe wird erfindungsgemäß durch ein Verfahren der o. g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß mittels einer digital gespeicherten Karte und Fahrzeugdaten eine Positionsbestimmung des Fahrzeuges durchgeführt wird, auf einer Fahrstrecke des Fahrzeuges vorhandene Fahrbahnneigungen und/oder Kreuzungen lokalisiert werden und in einem vorbestimmten Abstand des Fahrzeuges vor einer lokalisierten Fahrbahnneigungen und/oder Kreuzung eine automatische Bremsung ausgelöst wird, falls eine momentane Fahrzeuggeschwindigkeit über einer momentan vorbestimmten kritischen Fahrgeschwindigkeit für die lokalisierte Fahrbahnneigung und/oder Kreuzung und für den momentanen Abstand liegt.

Dies hat den Vorteil, daß kritische Fahrsituationen eines Kraftfahrzeuges frühzeitig erkannt und rechtzeitig Gegenmaßnahmen getroffen werden, so daß Gefahrensituationen für das Kraftfahrzeug rechtzeitig abgewendet werden.

Eine situationsgerechte Auslösebedingung für die Bremsung des Fahrzeug erhält man dadurch, daß die momentane vorbestimmte kritische Fahrgeschwindigkeit als diejenige Geschwindigkeit bestimmt wird, mit der das Fahrzeug bei einer Vollbremsung vor der lokalisierten Fahrbahnneigung und/oder Kreuzung eine vorbestimmte niedrigere Geschwindigkeit erreicht oder zum Stehen kommt.

In einer bevorzugten Ausführungsform der Erfindung ist die Fahrstrecke des Fahrzeuges eine aufgrund der momentanen Position und Fahrtrichtung berechnete Fahrstrecke; ggf. werden bei der Berechnung der Fahrstrecke weitere Größen wie Fahrzeugbewegungsgrößen und/oder der Reibwert der Fahrbahnoberfläche berücksichtigt.

In einer besonders bevorzugten Ausführungsform der Erfindung wird eine Bremsung des Kraftfahrzeuges ausgelöst, wenn ein Fahrer auf eine lokalisierte Fahrbahnneigung und/oder Kreuzung nicht in vorbestimmter Weise reagiert. Diese vorbestimmte Weise ist beispielsweise eine Geschwindigkeitsänderung oder ein Ausweich- oder an die Fahrbahnneigung und/oder Kreuzung angepaßtes Fahrmanöver.

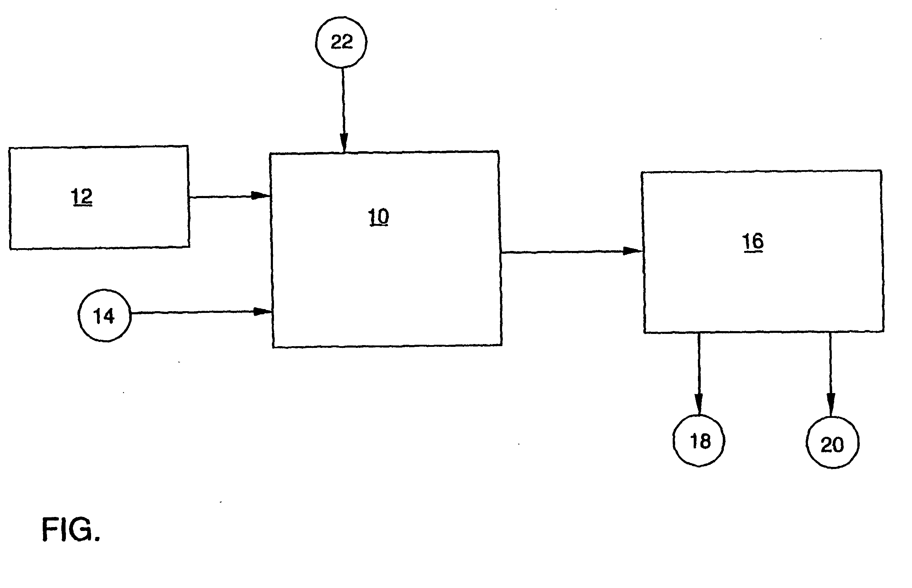

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt ein Blockschaltbild eines das erfindungsgemäßen Verfahren ausführenden Systems.

Ein Rechner 10 erhält von einer digital gespeicherten Karte 12 Daten bezüglich des Straßennetzes und ferner Fahrzeugdaten 14, wie beispielsweise Lenkwinkel, seitliche Beschleunigungen, Längsbeschleunigungen, Giergeschwindigkeit, Reibwert der Fahrbahnoberfläche, Giermoment, Geschwindigkeit, Winkelgeschwindigkeiten von Rädern etc., mittels derer der Rechner 10 eine Positionsfeststellung und Fahrstreckenberechnungen einer zu erwartenden Fahrstrecke ausführt.

Ferner nutzt der Rechner die Daten der Karte 12 dazu, mögliche Gefahrenstellen auf der berechneten, zu erwartenden Fahrstrecke, wie beispielsweise Kreuzungen, Kurven oder ähnliches zu lokalisieren. Wenn eine momentane Fahrgeschwindigkeit 22 des Fahrzeuges nicht an diese Gefahrenstelle angepaßt ist, so löst der Rechner über eine Steuereinheit 16 eine Betätigung von Stellgliedern 18, 20 aus, welche beispielsweise ein Stellglied 18 für eine Motordrosselfunktion oder ein Stellglied 20 für Bremsen umfassen.

Ferner stellt der Rechner 10 fest, ob die aus den Daten 14 berechnete Fahrstrecke von einer Straßenführung gemäß der Karte 12 abweicht. In diesem Fall ist eine höchst gefährliche Fahrsituation erkannt, da das Fahrzeug droht von der Fahrbahn abzukommen. Dieser Gefahr wirkt der Rechner 10 beispielsweise dadurch entgegen, daß die Geschwindigkeit mittels der Stellglieder 18 und 20 reduziert wird, also beispielsweise durch eine Radbremsfunktion und/oder eine Motorbremsfunktion.

Ferner kann der Rechner 10 mittels der Daten 14 überwachen, ob der Fahrer in einer vorbestimmten Weise auf eine nahende Gefahrenstelle reagiert oder nicht. Ignoriert der Fahrer beispielsweise durch eine anhaltend hohe Geschwindigkeit eine nahende Kreuzung, dann greift der Rechner 10 ein und stoppt das Fahrzeug vor der Kreuzung. Führt der Fahrer beispielsweise trotz nahender Kurve keine Lenkbewegung aus, so kann der Rechner 10 ebenfalls beispielsweise durch eine zügige Geschwindigkeitsreduktion die Folgen eines Unfalls zumindest verringern, wenn nicht sogar durch ein vollständiges Abbremsen des Fahrzeugs auf Geschwindigkeit null verhindern.

In einer vorteilhaften Weiterbildung der Erfindung ist es auch möglich, daß die Steuereinheit 16 auf den Lenkwinkel mittels eines entsprechenden Stellgliedes Einfluß nimmt, sobald keinerlei Reaktionen mehr vom Fahrer registriert werden, so daß ein Ausweichmanöver bzw. eine gesteuerte Notbremsung durchgeführt wird. Die Lenkwinkel werden dann beispielsweise gemäß den Daten der Karte 16 derart eingestellt, daß das Fahrzeug trotz Verlust der Kontrolle durch den Fahrer auf der Fahrbahn verbleibt und ohne Schleudern oder sonstiger unkontrollierter Fahrzustände bis zum Stillstand abgebremst wird.

Die Besonderheit des erfindungsgemäßen Verfahrens liegt dabei darin, daß dem Fahrer möglicherweise unbekannte Informationen über den weiteren Verlauf der Strecke dazu verwendet werden, frühzeitig Fahrfehler zu erkennen und möglicherweise auftretenden Gefahrensituationen bereits dann entgegen zu wirken, wenn der Fahrer die mögliche Gefahrensituationen noch gar nicht erkennen kann oder aber nicht mehr in der Lage ist, solche zu erkennen, beispielsweise aufgrund eines Schwächeanfalls oder eines sonstigen medizinischen Notfalls. Hierzu dient die Kopplung von momentanen und über die Zeit verfolgten Fahrzeugdaten 14 mit in der Karte 12 gespeicherten Daten.

### BEZUGSZEICHENLISTE

- 10: Rechner
- 12: digital gespeicherte Karte
- 14: Fahrzeugdaten
- 16: Steuereinheit für Stellglieder
- 18: Stellglied für Motordrosselfunktion
- 20: Stellglied für Bremsen
- 22: momentane Fahrgeschwindigkeit

## Patentansprüche

1. Verfahren zur Sicherheitsüberwachung eines Kraftfahrzeuges,
wobei mittels einer digital gespeicherten Karte und Fahrzeugdaten eine Positionsbestimmung des Fahrzeuges durchgeführt wird, **dadurch gekennzeichnet, dass** auf einer Fahrstrecke des Fahrzeuges vorhandene Fahrbahnneigungen und/oder Kreuzungen lokalisiert werden und in einem vorbestimmten Abstand des Fahrzeuges vor einer lokalisierten Fahrbahnneigung und/oder Kreuzung eine automatische Bremsung ausgelöst wird, falls eine momentane Fahrzeuggeschwindigkeit über einer momentan vorbestimmten kritischen Fahrgeschwindigkeit für die lokalisierte Fahrbahnneigung und/oder Kreuzung und für den momentanen Abstand zu dieser Fahrbahnneigung und/oder Kreuzung liegt.

2. Verfahren nach Anspruch 1,
**dadurch gekennzeichnet, dass**
die Fahrstrecke eine Straßenführung gemäß der digital gespeicherten Karte ist.

3. Verfahren nach einem der vorhergehenden Ansprüche,
**dadurch gekennzeichnet, dass**
die momentan vorbestimmte kritische Fahrgeschwindigkeit als diejenige Geschwindigkeit bestimmt wird, mit der das Fahrzeug bei einer Vollbremsung vor der lokalisierten Fahrbahnneigung und/oder Kreuzung eine vorbestimmte niedrigere Geschwindigkeit erreicht oder zum Stehen kommt.

4. Verfahren nach einem der vorhergehenden Ansprüche,
**dadurch gekennzeichnet, dass**
die Fahrstrecke des Fahrzeuges eine aufgrund der momentanen Position und Fahrtrichtung berechnete Fahrstrecke ist.

5. Verfahren nach Anspruch 4,
**dadurch gekennzeichnet, dass**
die Fahrstrecke unter Berücksichtigung von Fahrzeugbewegungsgrößen des Fahrzeuges ermittelt wird.

6. Verfahren nach Anspruch 4 oder 5,
**dadurch gekennzeichnet, dass**
die Fahrstrecke unter Berücksichtigung des Reibwertes der Fahrbahnoberfläche berechnet wird.

7. Verfahren nach einem der vorhergehenden Ansprüche,
**dadurch gekennzeichnet, dass**
eine Bremsung des Kraftfahrzeuges ausgelöst wird, wenn ein Fahrer auf eine lokalisierte Fahrbahnneigung und/oder Kreuzung nicht in vorbestimmter Weise, insbesondere durch eine Geschwindigkeitsänderung oder ein Fahrmanöver, reagiert.

## Claims

1. Method for monitoring the safety of a motor vehicle, the position of the vehicle being determined by means of a digitally stored map and vehicle data, **characterized in that** the incline in the carriageway and/or intersection which are present on a part of the route of the vehicle are located and automatic braking is triggered at a predetermined distance of the vehicle before an incline in the carriageway and/or intersection which are located if an instantaneous speed of the vehicle is higher than an instantaneously predetermined critical driving speed for the incline in the carriageway and/or intersection which are located and for the instantaneous distance from this incline in the carriageway and/or intersection.

2. Method according to Claim 1, **characterized in that** the part of the route is the course of a road according to the digitally stored map.

3. Method according to one of the preceding claims, **characterized in that** the instantaneously predetermined critical driving speed is determined as that speed at which the vehicle reaches a predetermined lower speed or comes to a standstill when full braking is carried out before the incline in the carriageway and/or intersection which are located.

4. Method according to one of the preceding claims, **characterized in that** the part of the route of the vehicle is a part of the route which is calculated on the basis of the instantaneous position and direction of travel.

5. Method according to Claim 4, **characterized in that** the part of the route is determined taking into account vehicle movement variables of the vehicle.

6. Method according to Claim 4 or 5, **characterized in that** the part of the route is calculated taking into account the coefficient of friction of the carriageway surface.

7. Method according to one of the preceding claims, **characterized in that** a braking operation of the motor vehicle is triggered if a driver does not react in a predetermined way to an incline in the carriageway and/or intersection which are located, in particular does not react by changing the speed or carrying out a driving manoeuvre.

## Revendications

1. Procédé de surveillance de la sécurité d'un véhicule automobile, dans lequel, au moyen d'une carte et de données du véhicule mémorisées numériquement, une détermination de la position du véhicule est effectuée, **caractérisé en ce que** des courbures de la chaussée et/ou des croisements présents sur un parcours de conduite du véhicule sont localisés et à une distance prédéterminée du véhicule avant une courbure de la chaussée et/ou un croisement localisés, un freinage automatique est déclenché au cas où une vitesse instantanée du véhicule se situe au-dessus d'un vitesse de conduite critique instantanée prédéterminée pour la courbure de la chaussée et/ou le croisement localisés et pour la distance instantanée à cette courbure de la chaussée et/ou ce croisement.

2. Procédé selon la revendication 1,
**caractérisé en ce que**
le parcours de conduite est un tracé de rues selon la carte mémorisée numériquement.

3. Procédé selon l'une quelconque des revendications précédentes,
**caractérisé en ce que**
la vitesse de conduite critique instantanée prédéterminée est déterminée en tant que vitesse avec laquelle le véhicule, s'il freine au maximum avant la courbure de la chaussée et/ou le croisement localisés, atteint une vitesse inférieure prédéterminée ou s'immobilise.

4. Procédé selon l'une quelconque des revendications précédentes,
**caractérisé en ce que**
le parcours de conduite du véhicule est un parcours de conduite calculé sur la base de la position instantanée et de la direction de conduite.

5. Procédé selon la revendication 4,
**caractérisé en ce que**
le parcours de conduite est déterminé en tenant compte de valeurs de déplacement du véhicule.

6. Procédé selon la revendication 4 ou 5,
**caractérisé en ce que**
le parcours de conduite est calculé en tenant compte du coefficient de frottement de la surface de la chaussée.

7. Procédé selon l'une quelconque des revendications précédentes,
**caractérisé en ce qu'**un
freinage du véhicule automobile est déclenché lorsqu'un conducteur ne réagit pas à une courbure de la chaussée et/ou à un croisement de manière prédéterminée, notamment par une variation de la vitesse ou une manoeuvre de conduite.
